# EUROPEAN PATENT SPECIFICATION

(11) **EP 3 317 911 B1**
(45) Date of publication and mention of the grant of the patent: **15.05.2019**
(21) Application number: 16728947.9
(22) Date of filing: 14.06.2016
(51) Int. Cl.: H01M 10/052, H01M 10/0567, H01M 4/505, H01M 4/52

(54) **LI-ION BATTERY ELECTROLYTE WITH REDUCED IMPEDANCE BUILD-UP**
LITHIUMIONENBATTERIEELEKTROLYT MIT REDUZIERTEM IMPEDANZAUFBAU
ÉLECTROLYTE DE BATTERIE DE LI-ION AVEC L'ACCUMULATION D'IMPÉDANCE RÉDUITE

(30) Priority: 22.06.2015 EP 15173159
(43) Date of publication of application: 09.05.2018
(73) Proprietor: BASF SE, 67056 Ludwigshafen am Rhein (DE)
(72) Inventor: CHESNEAU, Frederick, Francois, 68789 St. Leon-Rot (DE); MENDEZ AGUDELO, Manuel, Alejandro, 55130 Mainz (DE); SCHMIDT, Michael, 64665 Alsbach-Haehnlein (DE)
(74) Representative: BASF IP Association
(86) International application number: PCT/EP2016/063553
(87) International publication number: WO 2016/207017

(56) References cited:
- EP-A1- 2 270 917
- EP-A1- 2 597 718
- EP-A1- 2 741 362
- US-A1- 2010 028 784
- US-A1- 2015 118 581

## Description

The present invention relates to a high voltage or high energy electrochemical cell comprising CF₂H(CF₂)₃CH₂OCF₂CF₂H in the electrolyte composition.

Storing electrical energy is a subject of still growing interest. Efficient storage of electric energy would allow electric energy to be generated when it is advantageous and used when needed. Secondary electrochemical cells are well suited for this purpose due to their reversible conversion of chemical energy into electrical energy and vice versa (rechargeability). Secondary lithium batteries are of special interest for energy storage since they provide high energy density and specific energy due to the small atomic weight of the lithium ion, and the high cell voltages that can be obtained (typically 3 to 4 V) in comparison with other battery systems. For that reason, these systems have become widely used as a power source for many portable electronics such as cellular phones, laptop computers, mini-cameras, etc.

In secondary lithium batteries like lithium ion batteries typically electrolyte compositions are used containing non-aqueous solvents like organic carbonates, ethers, esters and ionic liquids. In general, the electrolyte composition does not contain one single solvent but a solvent mixture of different organic aprotic solvents and at least one conducting salt like LiPF₆. Many efforts were and are still undertaken to improve the properties and the performance of the secondary lithium batteries by variation of the electrolyte composition e.g. by adding compounds like SEI additives, flame retardant additives, water scavenger, overcharge protection additives etc. to the electrolyte composition and/or by selecting certain solvents or solvent compositions.

JP 3807459 B2 discloses non-aqueous electrolyte solutions for lithium secondary batteries containing partially halogenated ethers wherein the ratio of halogen : H with in the ether has to be at least 1. Due to the halogen content the electrolyte composition should be incombustible and stable against oxidative decomposition and it should be compatible with other electrolytes.

US 5,795,677 describes non-aqueous electrolyte compositions containing a solvent selected from halogenated ethers, a compound increasing the solubility of the halogenated ether and a lithium salt. Lithium secondary cells comprising such electrolyte composition should have improved cycle life and low temperature capacity and in particular having superior high-rate capacity.

Within the last years novel cathode active materials were developed allowing the manufacture of lithium ion batteries of higher voltage (above 4.2 V) and/or higher energy density, e.g. so called HE-NCM, HV-spinels or lithium cobalt phosphate with olivine structure. The working conditions in electrochemical cells comprising these cathode materials are more severe and the electrolyte compositions have to be adapted to match the requirements of these electrochemical cells. One effect occurring during cycling of electrochemical cells which is directly related to electrolyte decomposition and rarely considered is the impedance build-up. An increase of the impedance of an electrochemical cell leads to a decrease of the energy which is delivered by the electrochemical cell. The impedance build-up is more pronounced in electrochemical cells used at high voltages. Another problem especially of electrochemical cells comprising transition metal containing cathode materials is the dissolution of transition metal. Transition metal ions are dissolved in the electrolyte composition and can migrate to the anode of the cell where they have a detrimental effect. These transition metal ions are irreversibly lost for the cathode.

It is an object of the present invention to provide electrochemical cells showing no or only small impedance build up during cycling and showing less transition metal dissolution of the transition metal comprised in the cathode active material.

This object is achieved by an electrochemical cell comprising
(A) an anode comprising at least one anode active material,
(B) a cathode comprising at least one cathode active material containing Ni, and
(C) an electrolyte composition containing
   (i) at least one aprotic organic solvent;
   (ii) at least one lithium ion containing conducting salt;
   (iii) CF₂H(CF₂)₃CH₂OCF₂CF₂H; and
   (iv) optionally one or more additives.

This object is also accomplished by the use of CF₂H(CF₂)₃CH₂OCF₂CF₂H in electrolyte compositions for electrochemical cells for decreasing the dissolution of the transition metal contained in the cathode active material and for lowering the impedance build-up in the electrochemical cells.

The use of CF₂H(CF₂)₃CH₂OCF₂CF₂H in electrolyte compositions for electrochemical cells leads to a decreased impedance build up and decreased metal dissolution of electrochemical cells comprising a transition metal oxides and transition metal phosphates of olivine structure as cathode active material. CF₂H(CF₂)₃CH₂OCF₂CF₂H is better suited for reducing the dissolution of Ni than other fluorinated ethers. Electrochemical cells comprising CF₂H(CF₂)₃CH₂OCF₂CF₂H in the electrolyte composition show less impedance build up and decreased dissolution of the transition metals contained in the cathode active material. They also show less capacity fading.

In the following the invention is described in detail.

One aspect of the invention relates to an electrochemical cell as defined above comprising an electrolyte composition (C) containing
(i) at least one aprotic organic solvent;
(ii) at least one lithium ion containing conducting salt;
(iii) CF₂H(CF₂)₃CH₂OCF₂CF₂H; and
(iv) optionally one or more additives.

Electrolyte composition (C) contains at least one aprotic organic solvent, also referred to as component (i). Preferably the electrolyte composition contains at least two aprotic organic solvents. According to one embodiment the electrolyte composition may contain up to ten aprotic organic solvents.

The at least one aprotic organic solvent may be selected from cyclic and acyclic organic carbonates, di-C₁-C₁₀-alkylethers, di-C₁-C₄-alkyl-C₂-C₆-alkylene ethers and polyethers, cyclic ethers, cyclic and acyclic acetales and ketales, orthocarboxylic acids esters, cyclic and acyclic esters of carboxylic acids, cyclic and acyclic sulfones, and cyclic and acyclic nitriles and dinitriles.

Preferably the at least one aprotic organic solvent is selected from cyclic and acyclic carbonates, di-C₁-C₁₀-alkylethers, di-C₁-C₄-alkyl-C₂-C₆-alkylene ethers and polyethers, cyclic and acyclic acetales and ketales, and cyclic and acyclic esters of carboxylic acids, more preferred the electrolyte composition contains at least one aprotic organic solvent selected from cyclic and acyclic carbonates, and most preferred the electrolyte composition contains at least two aprotic organic solvents selected from cyclic and acyclic carbonates, in particular preferred the electrolyte composition contains at least one aprotic organic solvent selected from cyclic carbonates and at least one aprotic organic solvent selected from acyclic carbonates.

The aprotic organic solvents may be partly halogenated, e.g. they may be partly fluorinated, partly chlorinated or partly brominated, and preferably they may be partly fluorinated. "Partly halogenated" means, that one or more H of the respective molecule is substituted by a halogen atom, e.g. by F, Cl or Br. Preference is given to the substitution by F. The at least one solvent may be selected from partly halogenated and non-halogenated aprotic organic solvents i.e. the electrolyte composition may contain a mixture of partly halogenated and non-halogenated aprotic organic solvents.

Examples of cyclic carbonates are ethylene carbonate (EC), propylene carbonate (PC) and butylene carbonate (BC), wherein one or more H in may be substituted by F and/or a C₁ to C₄ alkyl group, e.g. 4-methyl ethylene carbonate, monofluoroethylene carbonate (FEC), and cis- and trans-difluoroethylene carbonate. Preferred cyclic carbonates are ethylene carbonate, monofluoroethylene carbonate and propylene carbonate, more preferred ethylene carbonate and monofluoroethylene carbonate, in particular monofluoroethylene carbonate.

Examples of acyclic carbonates are di-C₁-C₁₀-alkylcarbonates, wherein each alkyl group is selected independently from each other, preferred are di-C₁-C₄-alkylcarbonates. Examples are e.g. diethyl carbonate (DEC), ethyl methyl carbonate (EMC), dimethyl carbonate (DMC), and methylpropyl carbonate. Preferred acyclic carbonates are diethyl carbonate (DEC), ethyl methyl carbonate (EMC), dimethyl carbonate (DMC).

In one embodiment of the invention the electrolyte composition contains mixtures of acyclic organic carbonates and cyclic organic carbonates at a ratio by weight of from 1:10 to 10:1, preferred of from 3:1 to 1:1.

According to the invention each alkyl group of the di-C₁-C₁₀-alkylethers is selected independently from the other. Examples of di-C₁-C₁₀-alkylethers are dimethylether, ethylmethylether, diethylether, methylpropylether, diisopropylether, and di-n-butylether.

Examples of di-C₁-C₄-alkyl-C₂-C₆-alkylene ethers are 1,2-dimethoxyethane, 1,2-diethoxyethane, diglyme (diethylene glycol dimethyl ether), triglyme (triethyleneglycol dimethyl ether), tetraglyme (tetraethyleneglycol dimethyl ether), and diethylenglycoldiethylether.

Examples of suitable polyethers are polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl- end-capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of cyclic ethers are 1,4-dioxane, tetrahydrofuran, and their derivatives like 2-methyl tetrahydrofuran.

Examples of acyclic acetals are 1,1-dimethoxymethane and 1,1-diethoxymethane. Examples of cyclic acetals are 1,3-dioxane, 1,3-dioxolane, and their derivatives such as methyl dioxolane.

Examples of acyclic orthocarboxylic acid esters are tri-C₁-C₄ alkoxy methane, in particular trimethoxymethane and triethoxymethane. Examples of suitable cyclic orthocarboxylic acid esters are 1,4-dimethyl-3,5,8-trioxabicyclo[2.2.2]octane and 4-ethyl-1-methyl-3,5,8-trioxabicyclo[2.2.2]octane.

Examples of acyclic esters of carboxylic acids are ethyl and methyl formate, ethyl and methyl acetate, ethyl and methyl proprionate, and ethyl and methyl butanoate, and esters of dicarboxylic acids like 1,3-dimethyl propanedioate. An example of a cyclic ester of carboxylic acids (lactones) is γ-butyrolactone.

Examples of cyclic and acyclic sulfones are ethyl methyl sulfone, dimethyl sulfone, and tetrahydrothiophene-S,S-dioxide (sulfolane).

Examples of cyclic and acyclic nitriles and dinitriles are adipodinitrile, succinonitrile, acetonitrile, propionitrile, and butyronitrile.

Preferred electrolyte compositions contain monofluoroethylene carbonate. More preferred the electrolyte compositions contain combinations of monofluoroethylene carbonate with one or more acyclic carbonates like diethyl carbonate, ethyl methyl carbonate or dimethyl carbonate. For example, the electrolyte composition contains monofluoroethylene carbonate and one or more acyclic carbonates like diethyl carbonate, ethyl methyl carbonate or diethyl carbonate.

The electrolyte composition contains at least 30 vol.-%, more preferred at least 40 vol.-% and most preferred at least 50 vol.-% of at least one aprotic organic solvent (i), based on the total volume of the electrolyte composition

The inventive electrolyte composition (C) contains at least one conducting salt, also referred to as component (ii). The electrolyte composition functions as a medium that transfers ions participating in the electrochemical reaction taking place in an electrochemical cell. The conducting salt(s) are usually present in the electrolyte in the solvated or melted state. In liquid or gel electrolyte compositions the conducting salt is usually solvated in the aprotic organic solvent(s). Preferably the conducting salt is a lithium salt. More preferred the conducting salt is selected from the group consisting of
- Li[F₆₋ₓP(C_{y}F_{2y+1})ₓ], wherein x is an integer in the range from 0 to 6 and y is an integer in the range from 1 to 20;
   Li[B(R^{I})₄], Li[B(R^{I})₂(OR^{II}O)] and Li[B(OR^{II}O)₂] wherein each R^{I} is independently from each other selected from F, CI, Br, I, C₁-C₄ alkyl, C₂-C₄ alkenyl, C₂-C₄ alkynyl, OC₁-C₄ alkyl, OC₂-C₄ alkenyl, and OC₂-C₄ alkynyl wherein alkyl, alkenyl, and alkynyl may be substituted by one or more OR^{III}, wherein R^{III} is selected from C₁-C₆ alkyl, C₂-C₆ alkenyl, and C₂-C₆ alkynyl, and
   (OR^{II}O) is a bivalent group derived from a 1,2- or 1,3-diol, a 1,2- or 1,3-dicarboxlic acid or a 1,2- or 1,3-hydroxycarboxylic acid, wherein the bivalent group forms a 5- or 6-membered cycle via the both oxygen atoms with the central B-atom;
- LiClO₄; LiAsF₆; LiCF₃SO₃; Li₂SiF₆; LiSbF₆; LiAlCl₄, Li(N(SO₂F)₂), lithium tetrafluoro (oxalato) phosphate; lithium oxalate; and
- salts of the general formula Li[Z(CₙF₂ₙ₊₁SO₂)ₘ], where m and n are defined as follows:
   m = 1 when Z is selected from oxygen and sulfur,
   m = 2 when Z is selected from nitrogen and phosphorus,
   m = 3 when Z is selected from carbon and silicon, and
   n is an integer in the range from 1 to 20.

Suited 1,2- and 1,3-diols from which the bivalent group (OR^{II}O) is derived may be aliphatic or aromatic and may be selected, e.g., from 1,2-dihydroxybenzene, propane-1,2-diol, butane-1,2-diol, propane-1,3-diol, butan-1,3-diol, cyclohexyl-trans-1,2-diol and naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diole is 1,1,2,2-tetra(trifluoromethyl)-1,2-ethane diol.

"Fully fluorinated C₁-C₄ alkyl group" means, that all H-atoms of the alkyl group are substituted by F.

Suited 1,2- or 1,3-dicarboxlic acids from which the bivalent group (OR^{II}O) is derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acid are optionally substituted by one or more F and/or by at least one straight or branched non fluorinated, partly fluorinated or fully fluorinated C₁-C₄ alkyl group.

Suited 1,2- or 1,3-hydroxycarboxylic acids from which the bivalent group (OR^{II}O) is derived may be aliphatic or aromatic, for example salicylic acid, tetrahydro salicylic acid, malic acid, and 2-hydroxy acetic acid, which are optionally substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R^{I})₄], Li[B(R')₂(OR^{II}O)] and Li[B(OR^{II}O)₂] are LiBF₄, lithium difluoro oxalato borate and lithium dioxalato borate.

Preferably the at least one conducting salt is selected from F-containing conducting lithium salts, more preferred from LiPF₆, LiBF₄, and LiPF₃(CF₂CF₃)₃, even more preferred the conducting salt is selected from LiPF₆ and LiBF₄, and the most preferred conducting salt is LiPF₆.

The at least one conducting salt is usually present at a minimum concentration of at least 0.1 mol/l, preferably the concentration of the at least one conducting salt is 0.5 to 2 mol/l based on the entire electrolyte composition.

The electrolyte composition (C) contains the fluorinated ether CF₂H(CF₂)₃CH₂OCF₂CF₂H as component (iii) in the electrolyte composition. This ether is commercially available. The concentration of the fluorinated ether CF₂H(CF₂)₃CH₂OCF₂CF₂H in the electrolyte composition is usually in the range of 1 to 60 vol.-%, based on the total volume of the electrolyte composition, preferably in the range of 05 to 50 vol.-%, more preferred in the range of 10 to 40 vol.-%, based on the total volume of the electrolyte composition.

The ratio of the volume of the fluorinated ether CF₂H(CF₂)₃CH₂OCF₂CF₂H and the total volume of aprotic organic solvent(s) (i) present in the electrolyte composition is usually in the range of 1:20 to 2:1, preferable in the range of 1:4 to 1:1.

According to another aspect of the invention the fluorinated ether CF₂H(CF₂)₃CH₂OCF₂CF₂H is used in electrolyte compositions for electrochemical cells comprising a cathode active material containing at least one transition metal for decreasing dissolution of the at least one transition metal and/or in electrolyte compositions for electrochemical cells for lowering the impedance build-up in the electrochemical cells. Preferably the electrochemical cell is a lithium battery, more preferred a lithium ion battery. Usually the fluorinated ether CF₂H(CF₂)₃CH₂OCF₂CF₂H is used by adding the desired amount of the ether to the electrolyte composition. The fluorinated ether CF₂H(CF₂)₃CH₂OCF₂CF₂H is typically used in the electrolyte composition in a concentration 5 to 60 vol.-%, based on the total volume of the electrolyte composition, preferably in the range of 10 to 50 vol.-%, more preferred in the range of 15 to 40 vol.-%, based on the total volume of the electrolyte composition.

The electrolyte composition (C) may further contain one or more additive(s), also referred to as component (iv). Such additives are for example film forming additives, flame retardants, overcharge protection additives, wetting agents, additional HF and/or H₂O scavenger, stabilizer for LiPF₆ salt, ionic salvation enhancer, corrosion inhibitors, gelling agents, and the like.

Typical gelling agents are polymers which are added to electrolyte compositions containing a solvent or solvent mixture in order to convert liquid electrolytes into quasi-solid or solid electrolytes and thus to improve solvent retention, especially during ageing and to prevent leakage of solvent from the electrochemical cell. Examples for polymers used in electrolyte compositions are polyvinylidene fluoride, polyvinylidene-hexafluoropropylene copolymers, polyvinylidene-hexafluoropropylene-chlorotrifluoroethylene copolymers, Nafion, polyethylene oxide, polymethyl methacrylate, polyacrylonitrile, polypropylene, polystyrene, polybutadiene, polyethylene glycol, polyvinylpyrrolidone, polyaniline, polypyrrole and/or polythiophene.

Examples of flame retardants are organic phosphorous compounds like cyclophosphazenes, phosphoramides, alkyl and/or aryl tri-substituted phosphates, alkyl and/or aryl di- or tri-substituted phosphites, alkyl and/or aryl di- substituted phosphonates, alkyl and/or aryl tri-substituted phosphines, and fluorinated derivatives thereof.

Examples of HF and/or H₂O scavenger are optionally halogenated cyclic and acyclic silylamines, carbodiimides and isocyanates.

Examples of overcharge protection additives are cyclohexylbenzene, o-terphenyl, p-terphenyl, and biphenyl and the like, preferred are cyclohexylbenzene and biphenyl.

Film forming additives, also called SEI ("solid electrolyte interface") forming additives, are known to the person skilled in the art. A SEI forming additive according to the present invention is a compound which decomposes on an electrode to form a passivation layer on the electrode which prevents degradation of the electrolyte composition and/or the electrode. In this way, the lifetime of a battery is significantly extended. Preferably the SEI forming additive forms a passivation layer on the anode. An anode in the context of the present invention is understood as the negative electrode of a battery. Preferably, the anode has a reduction potential of 1 Volt or less vs. Li⁺/Li redox couple, such as a graphite anode. In order to determine if a compound qualifies as anode film forming additive, an electrochemical cell can be prepared comprising a graphite electrode and a lithium-ion containing cathode, for example lithium cobalt oxide, and an electrolyte containing a small amount of said compound, typically from 0.01 to 10 wt.-% of the electrolyte composition, preferably from 0.05 to 5 wt.-% of the electrolyte composition. Examples of SEI forming additives are vinylene carbonate and its derivatives such as vinylene carbonate and methylvinylene carbonate; fluorinated ethylene carbonate and its derivatives such as monofluoroethylene carbonate, cis- and trans-difluorocarbonate; propane sultone and its derivatives; ethylene sulfite and its derivatives; oxalate comprising compounds such as lithium oxalate, oxalato borates including dimethyl oxalate, lithium bis(oxalate) borate, lithium difluoro (oxalato) borate, and ammonium bis(oxalato) borate, and oxalato phosphates including lithium tetrafluoro (oxalato) phosphate; and ionic compounds containing a compound of formula (I) 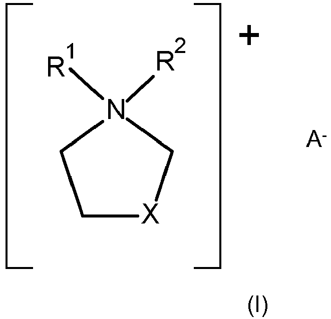 wherein
X is CH₂ or NR^{a},
R¹ is selected from C₁ to C₆ alkyl,
R² is selected from -(CH₂)ᵤ-SO₃-(CH₂)ᵥ-R^{b},
-SO₃- is -O-S(O)₂- or -S(O)₂-O-, preferably -SO₃- is -O-S(O)₂-,
u is an integer from 1 to 8, preferably u is 2, 3 or 4, wherein one or more CH₂ groups of the - (CH₂)ᵤ- alkylene chain which are not directly bound to the N-atom and/or the SO₃ group may be replaced by O and wherein two adjacent CH₂ groups of the -(CH₂)ᵤ- alkylene chain may be replaced by a C-C double bond, preferably the -(CH₂)ᵤ- alkylene chain is not substituted and u u is an integer from 1 to 8, preferably u is 2, 3 or 4,
v is an integer from 1 to 4, preferably v is 0,
R^{a} is selected from C₁ to C₆ alkyl,
R^{b} is selected from C₁-C₂₀ alkyl, C₂-C₂₀ alkenyl, C₂-C₂₀ alkynyl, C₆-C₁₂ aryl, and C₆-C₂₄ aralkyl, which may contain one or more F, and wherein one or more CH₂ groups of alkyl, alkenyl, alkynyl and aralkyl which are not directly bound to the SO₃ group may be replaced by O, preferably R^{b} is selected from C₁-C₆ alkyl, C₂-C₄ alkenyl, and C₂-C₄ alkynyl, which may contain one or more F, and wherein one or more CH₂ groups of alkyl, alkenyl, alkynyl and aralkyl which are not directly bound to the SO₃ group may be replaced by O, preferred examples of R^{b} include methyl, ethyl, trifluoromethyl, pentafluoroethyl, n-propyl, n-butyl, n-hexyl, ethenyl, ethynyl, allyl or prop-1-yn-yl,
and an anion A⁻ selected from bisoxalato borate, difluoro (oxalato) borate, [F_{z}B(CₘF₂ₘ₊₁)_{4-z}]⁻, [F_{y}P(CₘF₂ₘ₊₁)_{6-y}]⁻, (CₘF₂ₘ₊₁)₂P(O)O]⁻, [CₘF₂ₘ₊₁P(O)O₂]²⁻, [O-C(O)-CₘF₂ₘ₊₁]⁻, [O-S(O)₂-CₘF₂ₘ₊₁]⁻, [N(C(O)-CₘF₂ₘ₊₁)₂]⁻, [N(S(O)₂-CₘF₂ₘ₊₁)₂]⁻, [N(C(O)-CₘF₂ₘ₊₁)(S(O)₂-CₘF₂ₘ₊₁)]⁻, [N(C(O)-CₘF₂ₘ₊₁)(C(O)F)]⁻, [N(S(O)₂-CₘF₂ₘ₊₁)(S(O)₂F)]⁻, [N(S(O)₂F)₂]⁻, [C(C(O)-CₘF₂ₘ₊₁)₃]⁻, [C(S(O)₂-CₘF₂ₘ₊₁)₃]⁻, wherein m is an integer from 1 to 8, z is an integer from 1 to 4, and y is an integer from 1 to 6,

Preferred anions A⁻ are bisoxalato borate, difluoro (oxalato) borate, [F₃B(CF₃)]⁻, [F₃B(C₂F₅)]⁻, [PFₑ]⁻, [F₃P(C₂F₅)₃]⁻, [F₃P(C₃F₇)₃]⁻, [F₃P(C₄F₉)₃]⁻, [F₄P(C₂F₅)₂]⁻, [F₄P(C₃F₇)₂]⁻, [F₄P(C₄F₉)₂]⁻, [F₅P(C₂F₅)]⁻, [F₅P(C₃F₇)]⁻ or [F₅P(C₄F₉)]⁻, [(C₂F₅)₂P(O)O]⁻, [(C₃F₇)₂P(O)O]⁻ or [(C₄F₉)₂P(O)O]⁻. [C₂F₅P(O)O₂]²⁻, [C₃F₇P(O)O₂]²⁻, [C₄F₉P(O)O₂]²⁻, [O-C(O)CF₃]⁻, [O-C(O)C₂F₅]⁻, [O-C(O)C₄F₉]⁻, [O-S(O)₂CF₃]⁻, [O-S(O)₂C₂F₅]⁻, [N(C(O)C₂F₅)₂]⁻, [N(C(O)(CF₃)₂]⁻, [N(S(O)₂CF₃)₂]⁻, [N(S(O)₂C₂F₅)₂]⁻, [N(S(O)₂C₃F₇)₂]⁻, [N(S(O)₂CF₃) (S(O)₂C₂F₅)]⁻, [N(S(O)₂C₄F₉)₂]⁻, [N(C(O)CF₃)(S(O)₂CF₃)]⁻, [N(C(O)C₂F₅)(S(O)₂CF₃)]- or [N(C(O)CF₃)(S(O)₂-C₄F₉)]⁻, [N(C(O)CF₃)(C(O)F)]⁻, [N(C(O)C₂F₅)(C(O)F)]⁻, [N(C(O)C₃F₇)(C(O)F)]⁻, [N(S(O)₂CF₃)(S(O)₂F)]⁻, [N(S(O)₂C₂F₅)(S(O)₂F)]⁻, [N(S(O)₂C₄F₉)(S(O)₂F)]⁻, [C(C(O)CF₃)₃]⁻, [C(C(O)C₂F₅)₃]⁻ or [C(C(O)C₃F₇)₃]⁻, [C(S(O)₂CF₃)₃]⁻, [C(S(O)₂C₂F₅)₃]⁻, and [C(S(O)₂C₄F₉)₃]⁻.

More preferred the anion A⁻ is selected from bisoxalato borate, difluoro (oxalato) borate, CF₃SO₃⁻, and [PF₃(C₂F₅)₃]⁻.

Compounds of formula (I) are described in WO 2013/026854 A1.

Preferred SEI-forming additives are oxalato borates, fluorinated ethylene carbonate and its derivatives, vinylene carbonate and its derivatives, and compounds of formula (I). More preferred are lithium bis(oxalato) borate (LiBOB), vinylene carbonate, monofluoro ethylene carbonate, and compounds of formula (I), in particular monofluoro ethylene carbonate, and compounds of formula (I).

A compound added as additive may have more than one effect in the electrolyte composition and the device comprising the electrolyte composition. E.g. lithium oxalato borate may be added as additive enhancing the SEI formation but it may also be added as conducting salt.

According to a preferred embodiment of the present invention the electrolyte composition contains at least one SEI forming additive, all as described above or as described as being preferred.

The water content of the inventive electrolyte composition is preferably below 100 ppm, based on the weight of the electrolyte composition, more preferred below 50 ppm, most preferred below 30 ppm. The water content may be determined by titration according to Karl Fischer, e.g. described in detail in DIN 51777 or ISO760: 1978

The electrolyte composition contains preferably less than 50 ppm HF, based on the weight of the electrolyte composition, more preferred less than 40 ppm HF, most preferred less than 30 ppm HF. The HF content may be determined by titration according to potentiometric or potentiographic titration method.

The inventive electrolyte composition is preferably liquid at working conditions; more preferred it is liquid at 1 bar and 25 °C, even more preferred the electrolyte composition is liquid at 1 bar and -15 °C, in particular the electrolyte composition is liquid at 1 bar and -30 °C, even more preferred the electrolyte composition is liquid at 1 bar and -50 °C.

The electrolyte compositions described herein may be prepared by methods known to the person skilled in the field of the production of electrolytes, generally by dissolving the conducting salt (ii) in the corresponding mixture of solvent(s) (i) and fluorinated ether (iii) and adding optionally additional additives (iv), as described above.

The invention provides an electrochemical cell comprising
(A) an anode comprising at least one anode active material,
(B) a cathode comprising at least one cathode active material containing Ni, and
(C) an electrolyte composition as described above or as described as being preferred.

The electrochemical cell may be a secondary lithium battery, a double layer capacitor, or a lithium ion capacitor, preferably the inventive electrolyte compositions are used in lithium batteries and more preferred in lithium ion batteries. The terms "electrochemical cell" and "battery" are used interchangeably herein.

The general construction of such electrochemical devices is known and is familiar to the person skilled in this art - for batteries, for example, in Linden's Handbook of Batteries (ISBN 978-0-07-162421-3).

Preferably the electrochemical cell is a secondary lithium battery. The term "secondary lithium battery" as used herein means a rechargeable electrochemical cell, wherein the anode comprises lithium metal or lithium ions sometime during the charge/discharge of the cell. The anode may comprise lithium metal or a lithium metal alloy, a material occluding and releasing lithium ions, or other lithium containing compounds; e.g. the lithium battery may be a lithium ion battery, a lithium/sulphur battery, or a lithium/selenium sulphur battery.

In particular preferred the electrochemical device is a lithium ion battery, i.e. a secondary lithium ion electrochemical cell comprising a cathode comprising a cathode active material that can reversibly occlude and release lithium ions and an anode comprising an anode active material that can reversibly occlude and release lithium ions. The terms "secondary lithium ion electrochemical cell" and "(secondary) lithium ion battery" are used interchangeably within the present invention.

The cathode of the electrochemical cell comprises at least one cathode active material. A cathode active material is a material capable of occluding and releasing lithium ions during charge and discharge of the electrochemical cell. The at least one cathode active material contains Ni. Preferably the cathode active material contains at least 10 mol-% Ni, based on the total amount of transition metal present in the cathode active material, more preferred the cathode active material contains at least 20 mol-% Ni, even more preferred the cathode active material contains at least 50 mol-% Ni, based on the total amount of transition metal present in the cathode active material. The at least one cathode active material is preferably selected from lithium containing transition metal oxides and transition metal phosphates of olivine structure.

Preferably the at least one cathode active material is selected from Ni containing transition metal oxides and transition metal phosphates of olivine structure. Preferably the cathode active material is selected from transition metal oxides and transition metal phosphates of olivine structure containing at least 10 mol-% Ni, more preferred containing at least 20 mol-% Ni, and even more preferred from transition metal oxides and transition metal phosphates of olivine structure containing at least 50 mol-% Ni, based on the total amount of transition metal present in the Ni containing transition metal oxides and transition metal phosphates of olivine structure.

Examples of lithium containing transition metal phosphates of olivine structure are LiFePO₄, LiCoPO₄, and LiMnPO₄. An example of a lithium and Ni containing transition metal phosphate of olivine structure is LiNiPO₄. Examples of lithium containing intercalating metal oxides are LiCoO₂, LiNiO₂, mixed transition metal oxides with layer structure of formula (IIa) Li_{(1+d1)}[Niₐ₁Co_{b1}Mn_{c1}]_{(1-d1)}O₂₊ₑ wherein d1 is 0 to 0.3; a1, b1 and c1 may be same or different and are independently 0 to 0.8 wherein a1 + b1 + c1 = 1; and -0.1 ≤ e ≤ 0.1, transition metal oxides with layered structure having the general formula (IIb) Li_{1+d2}(Niₐ₂Co_{b2}Mn_{c2}M_{f})_{1-d2}O₂ wherein:
d2 is in the range of from zero to 0.2;
a2 is in the range of from 0.2 to 0.9;
b2 is in the range of from zero to 0.35;
c2 is in the range of from 0.1 to 0.7;
f is in the range of from ≥ zero to 0.2;
with a2 + b2+ c2+ f = 1; and
M being one or more selected from Al, Mg, Ca, V, Mo, Ti, Fe and Zn, and manganese-containing spinels like LiMnO₄ and spinels of formula (III) Li₁₊ₜM₂₋ₜO₄₋ₛ wherein s is 0 to 0.4, t is 0 to 0.4 and M is Mn and at least one further metal selected from the group consisting of Co and Ni, and lithium intercalating mixed oxides of Ni, Co and Al, e.g. Li_{(1+g)}[NiₕCoᵢAlⱼ]_{(1-g)}O₂₊ₖ. Typical values for g, h, I, j and k are: g = 0, h = 0.8 to 0.85, i = 0.15 to 0.20, j = 0.02 to 0.03 and k = 0. The transition metal oxides with layer structure of formula (IIa) and (IIb) are also called high energy NCM (HE-NCM) since they have higher energy densities than usual NCMs. The spinels of formula (III) show high voltage against Li/Li⁺ and are also called HV-spinels.

According to a preferred embodiment the cathode active material contains Ni and at least one additional transition metal different from Ni.

According to one embodiment the cathode active material is selected from cathode active materials wherein the upper cut-off voltage for the cathode during charging against Li/Li⁺ is of at least 4.5 V for activating the material, preferably of at least 4.6 V, more preferred of at least 4.7 V and even more preferred of at least 4.7 V. The term "upper cut-off voltage against Li/Li⁺ during charging" of the electrochemical cell means the voltage of the cathode of the electrochemical cell against a Li/Li⁺ reference anode which constitute the upper limit of the voltage at which the electrochemical cell is charged. A "cathode active material having a upper cut-off voltage for the cathode during charging against Li/Li⁺ is of at least 4.5 V for activating the material" means herein, that for initially activating the cathode active material, the electrochemical cell has to be charged up to at least 4.5 V against Li/Li⁺ to gain maximum possible access to the capacity of the cell. An example of such cathode active materials are the transition metal oxides of formula (I) which are also called HE-NCM due to their higher energy densities in comparison to usual NCMs. Both HE-NCM and NCM have operating voltages of about 3.3 to 3.8 V against Li/Li⁺, but high cut off voltages have to be used both, for activating and cycling, HE-NCMs to actually accomplish full charging and to benefit from their higher energy densities.

Examples of manganese-containing transition metal oxides with layer structure of formula (IIa) are those in which [Niₐ₁Co_{b1}Mn_{c1}] is selected from Ni_{0.33}Co₀Mn_{0.66}, Ni_{0.25}Co₀Mn_{0.75}, Ni_{0.35}Co_{0.15}Mn_{0.5}, Ni_{0.21}Co_{0.08}Mn_{0.71} and Ni_{0.22}Co_{0.12}Mn_{0.66}. It is preferred that the transition metal oxides of general formula (IIa) do not contain further cations or anions in significant amounts.

Examples of manganese-containing transition metal oxides with layer structure of formula (IIb) are those in which [Niₐ₂Co_{b2}Mn_{c2}M_{f}] is selected from Ni_{0.19}Co_{0.10}Mn_{0.53}Fe_{0.01}, Ni_{0.23}Co_{0.12}Mn_{0.50}Fe_{0.01}, Ni_{0.16}Co_{0.08}Mn_{0.55}Fe_{0.01}, and Ni_{0.19}Co_{0.10}Mn_{0.53}Al_{0.01}.

An examples of lithium intercalating mixed oxides of Ni, Co and Al is LiNi_{0.8}Co_{0.15}Al_{0.05}O₂.

According to another embodiment the cathode active material is selected from materials which allow during discharge at a rate of C/15 to use at least 50 % of the capacity of the electrochemical cell at a voltage against Li/Li⁺ of at least 4.2 V, preferably of at least 4.3 V, more preferred of at least 4.4 V, even more preferred of at least 4.5 V and most preferred of at least 4.6 V. These cathode active material allow the use of at least half of their capacity at high voltages. Examples of such cathode active materials are LiCoPO₄ of olivine and the manganese-containing spinels of general formula (III) as described above.

According to a further embodiment the cathode active material contains Mn.

According to another embodiment the cathode active material contains at least two different transition metals, preferably the at least two different transition metals are selected from Co, Mn, and Ni, more preferred the cathode active material contains Mn, Ni and Co.

In one embodiment the cathode active material is selected from transition metal oxides with layered structure having the general formula (IIa) Li_{(1+d1)}[Niₐ₁Co_{b1}Mn_{c1}]_{(1-d1)}O₂₊ₑ wherein d1 is 0 to 0.3; a1, b1 and c1 may be same or different and are independently 0 to 0.9 wherein a1 + b1 + c1 = 1; and -0.1 e ≤ 0.1. Preferably d1 is 0 to 0.3; a1, b1 and c1 may be same or different and are independently 0 to 0.8 wherein a1 + b1 + c1 = 1; and -0.1 e ≤ 0.1. For a1 it is preferred that a1 is > zero to 0.9, more preferred a1 is 0.1 to 0.9, even more preferred a1 is 0.1 to 0.8, even more preferred a1 is 0.2 to 0.8 and in particular preferred a1 is 0.5 to 0.8.

According to another embodiment of the invention the cathode active material is selected from transition metal oxides with layered structure having the general formula (IIb) Li_{1+d2}(Niₐ₂Co_{b2}Mn_{c2}M_{f})_{1-d2}O₂ wherein
d2 is in the range of from zero to 0.2;
a2 is in the range of from 0.2 to 0.9, preferred in the range of 0.2 to 0.8 and more preferred in the range of 0.5 to 0.8;
b2 is in the range of from zero to 0.35;
c2 is in the range of from 0.1 to 0.7, preferred in the range of 0.2 to 0.7;
f is in the range of from ≥ zero to 0.2;
with a2 + b2+ c2+ f = 1; and
M being one or more selected from Al, Mg, Ca, V, Mo, Ti, Fe and Zn.

In case that the cathode active materials of general formula (IIb) contain a further metal M, i.e. f is > 0, there may be one or more different M present, each selected from Al, Mg, Ca, V, Mo, Ti, Fe and Zn.

According to another embodiment the at least one cathode active material is selected from lithium intercalating mixed oxides of Ni, Co and Al, preferably from Li_{(1+g)}[NiₕCoᵢAlⱼ]_{(1-g)}O₂₊ₖ wherein g = 0, h = 0.8 to 0.85, i = 0.15 to 0.20, j = 0.02 to 0.03 and k = 0.

In another embodiment the cathode active material is LiNiPO₄ with olivine structure.

In a further embodiment the cathode active material is selected from manganese-containing spinels of general formula (III) Li₁₊ₜM₂₋ₜO₄₋ₛ wherein s is 0 to 0.4, t is 0 to 0.4 and M is Mn and at least one further metal selected from Co and Ni, preferably M is Mn and Ni and optionally Co.

The cathode may further comprise electrically conductive materials like electrically conductive carbon and usual components like binders. Compounds suited as electrically conductive materials and binders are known to the person skilled in the art. For example, the cathode may comprise carbon in a conductive polymorph, for example selected from graphite, carbon black, carbon nanotubes, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyvinyl alcohol, polyisoprene and copolymers of at least two comonomers selected from ethylene, propylene, styrene, (meth)acrylonitrile and 1,3-butadiene, especially styrene-butadiene copolymers, and halogenated (co)polymers like polyvinlyidene chloride, polyvinly chloride, polyvinyl fluoride, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile.

The anode comprised within the lithium batteries of the present invention comprises an anode active material that can reversibly occlude and release lithium ions or is capable to form an alloy with lithium. In particular carbonaceous material that can reversibly occlude and release lithium ions can be used as anode active material. Carbonaceous materials suited are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further anode active materials are lithium metal, or materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, an eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon which is able to intercalate lithium ions. The silicon may be used in different forms, e.g. in the form of nanowires, nanotubes, nanoparticles, films, nanoporous silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. One possibility of preparing Si thin film electrodes are described in R. Elazari et al.; Electrochem. Comm. 2012, 14, 21-24. It is also possible to use a silicon/carbon composite as anode active material according to the present invention.

Other possible anode active materials are lithium ion intercalating oxides of Ti.

Preferably the anode active material is selected from carbonaceous material that can reversibly occlude and release lithium ions, particularly preferred the carbonaceous material that can reversibly occlude and release lithium ions is selected from crystalline carbon, hard carbon and amorphous carbon, in particular preferred is graphite. In another preferred embodiment the anode active is selected from silicon that can reversibly occlude and release lithium ions, preferably the anode comprises a thin film of silicon or a silicon/carbon composite. In a further preferred embodiment the anode active is selected from lithium ion intercalating oxides of Ti.

The anode and cathode may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The inventive lithium batteries may contain further constituents customary per se, for example separators, housings, cable connections etc. The housing may be of any shape, for example cuboidal or in the shape of a cylinder, the shape of a prism or the housing used is a metal-plastic composite film processed as a pouch. Suited separators are for example glass fiber separators and polymer-based separators like polyolefin separators.

Several inventive lithium batteries may be combined with one another, for example in series connection or in parallel connection. Series connection is preferred. The present invention further provides for the use of inventive lithium ion batteries as described above in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers. But the inventive lithium ion batteries can also be used for stationary energy stores.

Even without further statements, it is assumed that a skilled person is able to utilize the above description in its widest extent. Consequently, the preferred embodiments and examples are to be interpreted merely as a descriptive enclosure which in no way has any limiting effect at all.

The invention is illustrated by the examples which follow, which do not, however, restrict the invention.

### Experimental section:

### A) Electrolyte compositions

The electrolyte compositions consisted of 1.0 M LiPF₆ dissolved in different mixtures of diethyl carbonate (DEC, BASF), monofluoroethylene carbonate (FEC, BASF), 1,1,2,2-tetrafluoroethyl 2,2,3,3-tetrafluoropropyl ether (FEPrE, Foosung co., Ltd) and 1H,1H,5H-perfluoropentyl-1,1,2,2-tetrafluoroethylether (CF₂H(CF₂)₃CH₂OCF₂CF₂H, FPEE, Foosung co., Ltd) as indicated in Table 1. "%" refers to the volume of the electrolyte composition. All solvents were dry (water content < 3 ppm). All electrolyte compositions were prepared and stored in an Ar-filled glovebox having oxygen and water levels below 1.0 ppm.

**Table 1. Solvent composition in volume percentage of electrolyte compositions employed.**

| Electrolyte composition EL | FEC | DEC | FEPrE | FPEE |
|---|---|---|---|---|
| EL 1 | 33% | 66% | - | - |
| (comparative) | | | | |
| EL 2 | 33% | 33% | 33% | - |
| (comparative) | | | | |
| EL 3 | 33% | 33% | | 33% |
| (inventive) | | | | |
| EL 4 | 12% | 88% | - | - |
| (comparative) | | | | |
| EL 5 | 12% | 63% | 25% | - |
| (comparative) | | | | |
| EL 6 | 12% | 63% | | 25% |
| (inventive) | | | | |
| | 25% | 75% | - | |
| (comparative) | | | | |
| EL 8 | 25% | 50% | 25% | - |
| (comparative) | | | | |
| EL 9 | 25% | 50% | - | 25% |
| (inventive) | | | | |

### B) Electrochemical cells

The positive electrodes for the electrochemical cycling experiments were prepared by coating a slurry containing 92.5 wt.-% of cathode active material, 2 wt.-% Graphite SFG 6L (Timcal), 2 wt.-% Super C65 carbon black (Timcal) and 3.5 wt.-% HSV900 PVDF binder (Kynar) suspended in N-ethyl-2-pyrrolidinone (NEP) on aluminum foil using a Mathis coater at a coating speed of 0.4 m/min. The cathode active material was the HE-NCM 0.42 Li₂MnO₃·0.58Li(Ni_{0.4}Mn_{0.4}Co_{0.2})O₂ = 1.174Li(Ni_{0.23}Mn_{0.65}Co_{0.12})_{0.83}O₂, coated with 1 wt.-% carbon (HE-NCM+1%C, BASF). The loading obtained was about 6.5 mg of HE-NCM/cm². The positive electrode tapes were then calendered to obtain an electrode density of ca. 2.5 g/cm³ (capacity = 2.1 mAh/cm²).

Commercial graphite-coated tapes from Elexcel Corporation Ltd. (capacity = 2.34 mAh/cm²) were used as negative electrodes. 2032-type coin cells were assembled using 14 mm diameter positive electrodes, 15 mm diameter negative electrodes, 16 mm diameter glass-fiber filters (Whatmann GF/D) as separators and 90 µL of the respective electrolyte composition. All cells were assembled in an argon-filled glove box having oxygen and water levels below 1.0 ppm. The cells were cycled in a Maccor 4000 battery-test system.

### C) Metal dissolution experiments

For the metal dissolution experiments, HE-NCM+1%C/graphite full-cells were cycled at 45°C between 2.0 and 4.7 V at C/15 during the first cycle, followed by cycles between 2.0 and 4.6 V at C/10 (1 cycle), C/5 (5 cycles) and 1C (200 cycles). C/5 cycles were performed every 40 1C cycles starting from cycle number 3, yielding a total number of 211 cycles. The discharged cells were then transferred into an Ar-filled glovebox and opened. The anodes and separators of each cell were recovered, digested with concentrated acid and analyzed with Inductively Coupled Plasma Atomic Emission Spectrometry (ICP-AES). The values reported are the average of two cells and are expressed as average metal dissolution rates in ppm/cycle in respect to the initial content of each individual metal in the cathode active material. The results are shown in Table 2

**Table 2. Average metal dissolution rates (ppm/cycle) determined after 211 cycles at 45°C.**

| | Electrolyte composition | Co | Ni | Mn |
|---|---|---|---|---|
| Example 1 | EL 1 | 48 | 254 | 66 |
| (comparison) | | | | |
| Example 2 | EL 2 | 22 | 152 | 25 |
| (comparison) | | | | |
| Example 3 | EL 3 | 19 | 121 | 21 |
| (inventive) | | | | |

As can be seen from the results of Table 2 both electrochemical cells containing a fluorinated ether show less metal dissolution than the cell without fluorinated ether wherein the fluorinated ether CF₂H(CF₂)₃CH₂OCF₂CF₂H (FPEE) shows a larger decrease in metal dissolution rates compared to the fluorinated ether CF₂HCF₂CH₂OCF₂CF₂H (FEPrE). The use of FPEE instead of FEPrE leads to a surprising improvement on the dissolution of Ni contained in the cathode active material, even though the Ni is present only in an amount of 23 mol-%, based on the total amount of transition metal.

### D) Impedance experiments

Impedance build-up measurements were carried out with HE-NCM+1%C/graphite full-cells at 25 °C. The cells were cycled (Charge: constant current-constant voltage, Discharge: constant current) between 2.0 and 4.7 V at C/15 (charge and discharge) during the first cycle, followed by prolonged cycling between 2.0 and 4.6 V at C/10 (charge and discharge - 2 cycles), C/5 (charge and discharge - 2 cycles), C/2 (C/5 charge- 2 cycles), 1C (C/5 charge - 2 cycles), 2C ( C/5 charge - 2 cycles), 3C (C/5 charge - 2 cycles) and 1C (charge and discharge - 40 cycles), where the last six steps were repeated at least five times. DC resistance (DCIR) measurements were carried out at each cycle at 100% state-of-charge by applying a 1C-current interrupt during 1 second. A second set of the same measurements was performed at 45 °C, in which the cells were cycled between 2.0 and 4.7 V at C/15 (charge and discharge) during the first cycle, followed by prolonged cycling between 2.0 and 4.6 V at C/10 (charge and discharge - 1 cycle), C/5 (charge and discharge - 1 cycle), 1C (charge and discharge - 40 cycles), where the last two steps were repeated five times. DCIR measurements were performed as described above. The results are displayed in Tables 3 and 4.

**Table 3. Average cell resistances (ohm) determined after 50, 100 and 200 cycles at 1C at 25°C.**

| | Electrolyte composition | Delta Resistance after 50 cycles at 1C (Ohm) | Delta Resistance after 100 cycles at 1C (Ohm) | Delta Resistance after 200 cycles at 1C (Ohm) |
|---|---|---|---|---|
| Example 4 | EL 4 | 9.8 | 17.8 | 25.4 |
| (comparison) | | | | |
| Example 5 | EL 5 | 8.0 | 14.1 | 29.4 |
| (comparison) | | | | |
| Example 6 | EL 6 | 3.5 | 4.0 | 12.0 |
| (inventive) | | | | |

As can be seen from the results of Table 3 both electrochemical cells containing a fluorinated ether show diminished impedance build-up in comparison to the cell without fluorinated ether wherein the fluorinated ether CF₂H(CF₂)₃CH₂OCF₂CF₂H (FPEE) shows consistently lower resistance values compared to the fluorinated ether CF₂HCF₂CH₂OCF₂CF₂H (FEPrE).

**Table 4. Average cell resistances (ohm) determined after 50, 100 and 200 cycles at 1C at 45°C.**

| | Electrolyte composition | Delta Resistance after 50 cycles at 1C (Ohm) | Delta Resistance after 100 cycles at 1C (Ohm) | Delta Resistance after 200 cycles at 1C (Ohm) |
|---|---|---|---|---|
| Example 7 | EL 7 | 20.7 | 28.8 | 43.3 |
| (comparison) | | | | |
| Example 8 | EL 8 | 11.1 | 17.7 | 26.4 |
| (comparison) | | | | |
| Example 9 | EL 9 | 5.17 | 13.2 | 26.1 |
| (inventive) | | | | |

As can be seen from the results of Table 4, diminished impedance build-up can also be observed at 45°C in presence of FPEE, as the cell with fluorinated ether FPEE shows consistently lower resistance values compared to, both, cells whose electrolyte do not contain any fluorinated ether and those in presence of the fluorinated ether FEPrE.

### E) Capacity fading experiments

Cycling data at 25°C was obtained with HE-NCM+1%C/graphite full-cells at 25 °C. The cells were cycled between 2.0 and 4.7 V at C/15 during the first cycle, followed by prolonged cycling between 2.0 and 4.6 V at C/10 (2 cycles), C/5 (2 cycles), C/2 (2 cycles), 1C (2 cycles), 2C (2 cycles), 3C (2 cycles) and 1C (40 cycles), where the last six steps were repeated at least five times.

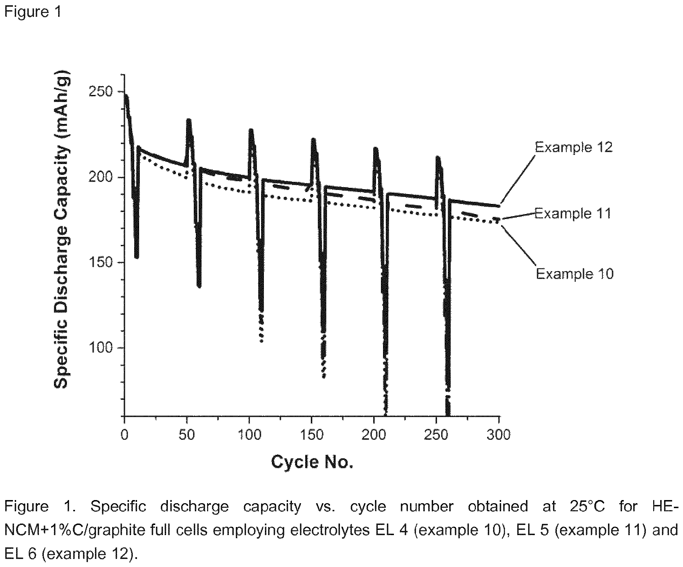

As presented in Figure 1, cells built with EL 6 (example 12) present improved capacity retention upon prolonged cycling compared not only to the case where no fluorinated ether is added (EL 4 in example 10) but also to the case where FEPrE is present (EL 5 in example 11). Therefore, it can be concluded that the addition of FPEE improves also the cycling stability of HE-NCM full cells.

## Claims

1. An electrochemical cell comprising
(A) an anode comprising at least one anode active material,
(B) a cathode comprising at least one cathode active material containing Ni, and
(C) an electrolyte composition containing
(i) at least one aprotic organic solvent;
(ii) at least one lithium ion containing conducting salt;
(iii) CF₂H(CF₂)₃CH₂OCF₂CF₂H; and
(iv) optionally one or more additives.

2. The electrochemical cell according to claim 1, wherein the electrolyte composition (C) contains 1 to 60 vol.-% CF₂H(CF₂)₃CH₂OCF₂CF₂H based on the total volume of the electrolyte composition.

3. The electrochemical cell according to claim 1 or 2, wherein the cathode active material contains at least 10 mol-% Ni based on the total amount of transition metal present in the cathode active material.

4. The electrochemical cell according to any of claims 1 to 3, wherein the cathode active material contains at least 50 mol-% Ni based on the total amount of transition metal present in the cathode active material.

5. The electrochemical cell according to any of claims 1 to 4, wherein the cathode active material contains at least one additional transition metal different from Ni.

6. The electrochemical cell according to any of claims 1 to 5, wherein the cathode active material contains Mn, Ni and Co.

7. The electrochemical cell according to any of claims 1 to 6, wherein cathode active material is selected from transition metal oxides with layered structure having the general formula (IIa) Li_{(1+d1)}[Niₐ₁Co_{b1}Mn_{c1}]_{(1-d1)}O₂₊ₑ wherein
d1 is 0 to 0.3;
a1, b1 and c1 may be same or different and are independently 0 to 0.9 wherein a1 + b1 +
c1 = 1; and
-0.1 ≤ e ≤ 0.1.

8. The electrochemical cell according to any of claims 1 to 6, wherein cathode active material is selected from transition metal oxides with layered structure having the general formula (IIb) Li_{1+d2}(Niₐ₂Co_{b2}Mn_{c2}M_{f})_{1-d2}O₂ wherein
d2 is in the range of from zero to 0.2;
a2 is in the range of from 0.2 to 0.9;
b2 is in the range of from zero to 0.35;
c2 is in the range of from 0.1 to 0.7;
f is in the range of from ≥ zero to 0.2;
with a2 + b2+ c2+ f = 1; and
M being one or more selected from Al, Mg, Ca, V, Mo, Ti, Fe and Zn.

9. The electrochemical cell according to any of claims 1 to 5, wherein the cathode active material is selected from lithium intercalating mixed oxides of Ni, Co and Al.

10. The electrochemical cell according to any of claims 1 to 6, wherein the cathode active material is selected from manganese-containing spinels of general formula Li₁₊ₜM₂₋ₜO₄₋ₛ wherein s is 0 to 0.4, t is 0 to 0.4 and M is Mn and Ni and optionally Co.

11. The electrochemical cell according to any of claims 1 to 10, wherein the aprotic organic solvent (i) is selected from cyclic and acyclic organic carbonates, di-C₁-C₁₀-alkylethers, di-C₁-C₄-alkyl-C₂-C₆-alkylene ethers and polyethers, cyclic ethers, cyclic and acyclic acetales and ketales, orthocarboxylic acids esters, cyclic and acyclic esters and diesters of carboxylic acids, cyclic and acyclic sulfones, and cyclic and acyclic nitriles and dinitriles and mixtures thereof.

12. The electrochemical cell according to any of claims 1 to 11, wherein the aprotic organic solvent (i) is selected from cyclic and acyclic organic carbonates and mixtures thereof.

13. The electrochemical cell according to any of claims 1 to 12, wherein the electrolyte composition contains at least one additive (iv) selected from film forming additives, flame retardants, overcharging additives, wetting agents, HF and/or H₂O scavenger, stabilizer for LiPF₆ salt, ionic salvation enhancer, corrosion inhibitors, and gelling agents.

14. Use of CF₂H(CF₂)₃CH₂OCF₂CF₂H in electrolyte compositions for electrochemical cells comprising a cathode active material containing at least one transition metal for decreasing dissolution of the at least one transition metal in the electrolyte composition.

15. Use of CF₂H(CF₂)₃CH₂OCF₂CF₂H in electrolyte compositions for electrochemical cells for lowering the impedance build-up in the electrochemical cells.

## Patentansprüche

1. Elektrochemische Zelle, umfassend
(A) eine Anode mit mindestens einem Anodenaktivmaterial,
(B) eine Kathode mit mindestens einem Ni enthaltenden Kathodenaktivmaterial und
(C) eine Elektrolytzusammensetzung, enthaltend
(i) mindestens ein aprotisches organisches Lösungsmittel;
(ii) mindestens ein lithiumionenhaltiges Leitsalz;
(iii) CF₂H(CF₂)₃CH₂OCF₂CF₂H; und
(iv) gegebenenfalls ein oder mehrere Additive.

2. Elektrochemische Zelle nach Anspruch 1, wobei die Elektrolytzusammensetzung (C) 1 bis 60 Vol.-% CF₂H(CF₂)₃CH₂OCF₂CF₂H, bezogen auf das Gesamtvolumen der Elektrolytzusammensetzung, enthält.

3. Elektrochemische Zelle nach Anspruch 1 oder 2, wobei das Kathodenaktivmaterial mindestens 10 Mol-% Ni, bezogen auf die Gesamtmenge von Übergangsmetall in dem Kathodenaktivmaterial, enthält.

4. Elektrochemische Zelle nach einem der Ansprüche 1 bis 3, wobei das Kathodenaktivmaterial mindestens 50 Mol-% Ni, bezogen auf die Gesamtmenge von Übergangsmetall in dem Kathodenaktivmaterial, enthält.

5. Elektrochemische Zelle nach einem der Ansprüche 1 bis 4, wobei das Kathodenaktivmaterial mindestens ein zusätzliches Übergangsmetall, das von Ni verschieden ist, enthält.

6. Elektrochemische Zelle nach einem der Ansprüche 1 bis 5, wobei das Kathodenaktivmaterial Mn, Ni und Co enthält.

7. Elektrochemische Zelle nach einem der Ansprüche 1 bis 6, wobei das Kathodenaktivmaterial aus Übergangsmetalloxiden mit Schichtstruktur mit der allgemeinen Formel (IIa) Li_{(1+d1)}[Niₐ₁Co_{b1}Mn_{c1}]_{(1-d1)}O₂₊ₑ ausgewählt ist, wobei
d1 für 0 bis 0,3 steht;
a1, b1 und c1 gleich oder verschieden sein können und unabhängig für 0 bis 0,9 stehen, wobei a1 + b1 + c1 = 1; und
-0,1 ≤ e ≤ 0,1.

8. Elektrochemische Zelle nach einem der Ansprüche 1 bis 6, wobei das Kathodenaktivmaterial aus Übergangsmetalloxiden mit Schichtstruktur mit der allgemeinen Formel (IIb) Li_{1+d2}[Niₐ₂Co_{b2}Mn_{c2}M_{f}]_{1-d2}O₂ ausgewählt ist, wobei
d2 im Bereich von null bis 0,2 liegt;
a2 im Bereich von 0,2 bis 0,9 liegt;
b2 im Bereich von null bis 0,35 liegt;
c2 im Bereich von 0,1 bis 0,7 liegt;
f im Bereich von ≥ null bis 0,2 liegt;
wobei a2 + b2 + c2 + f = 1; und
wobei M für ein oder mehrere Elemente steht, die aus Al, Mg, Ca, V, Mo, Ti, Fe und Zn ausgewählt sind.

9. Elektrochemische Zelle nach einem der Ansprüche 1 bis 5, wobei das Kathodenaktivmaterial aus Lithium interkalierenden Mischoxiden von Ni, Co und Al ausgewählt ist.

10. Elektrochemische Zelle nach einem der Ansprüche 1 bis 6, wobei das Kathodenaktivmaterial aus manganhaltigen Spinellen der allgemeinen Formel Li₁₊ₜM₂₋ₜO₄₋ₛ ausgewählt ist, wobei s für 0 bis 0,4 steht, t für 0 bis 0,4 steht und M für Mn und Ni und gegebenenfalls Co steht.

11. Elektrochemische Zelle nach einem der Ansprüche 1 bis 10, wobei das aprotische organische Lösungsmittel (i) aus cyclischen und acyclischen organischen Carbonaten, Di-C₁-C₁₀-alkylethern, Di-C₁-C₄-alkyl-C₂-C₆-alkylenethern und Polyethern, cyclischen Ethern, cyclischen und acyclischen Acetalen und Ketalen, Orthocarbonsäureestern, cyclischen und acyclischen Estern und Diestern von Carbonsäuren, cyclischen und acyclischen Sulfonen und cyclischen und acyclischen Nitrilen und Dinitrilen und Mischungen davon ausgewählt ist.

12. Elektrochemische Zelle nach einem der Ansprüche 1 bis 11, wobei das aprotische organische Lösungsmittel (i) aus cyclischen und acyclischen organischen Carbonaten und Mischungen davon ausgewählt ist.

13. Elektrochemische Zelle nach einem der Ansprüche 1 bis 12, wobei die Elektrolytzusammensetzung mindestens ein Additiv (iv) enthält, das aus filmbildenden Additiven, Flammschutzmitteln, Überladeadditiven, Netzmitteln, HF- und/oder H₂O-Fängern, Stabilisatoren für LiPF₆-Salz, Mitteln zur Verbesserung der Ionensolvatation, Korrosionsinhibitoren und Gelbildnern ausgewählt ist.

14. Verwendung von CF₂H(CF₂)₃CH₂OCF₂CF₂H in Elektrolytzusammensetzungen für elektrochemische Zellen mit einem Kathodenaktivmaterial, das mindestens ein Übergangsmetall enthält, zur Verringerung der Auflösung des mindestens einen Übergangsmetalls in der Elektrolytzusammensetzung.

15. Verwendung von CF₂H(CF₂)₃CH₂OCF₂CF₂H in Elektrolytzusammensetzungen für elektrochemische Zellen zur Verringerung des Impedanzaufbaus in den elektrochemischen Zellen.

## Revendications

1. Cellule électrochimique comprenant
(A) une anode comprenant au moins une matière active d'anode,
(B) une cathode comprenant au moins une matière active de cathode contenant du Ni et
(C) une composition d'électrolyte contenant
(i) au moins un solvant organique aprotique ;
(ii) au moins un sel conducteur contenant des ions lithium ;
(iii) CF₂H(CF₂)₃CH₂OCF₂CF₂H; et
(iv) éventuellement un ou plusieurs additifs.

2. Cellule électrochimique selon la revendication 1, dans laquelle la composition d'électrolyte (C) contient 1 à 60 % en volume de CF₂H(CF₂)₃CH₂OCF₂CF₂H par rapport au volume total de la composition d'électrolyte.

3. Cellule électrochimique selon la revendication 1 ou 2, dans laquelle la matière active de cathode contient au moins 10 % en mole de Ni par rapport à la quantité totale de métaux de transition présents dans la matière active de cathode.

4. Cellule électrochimique selon l'une quelconque des revendications 1 à 3, dans laquelle la matière active de cathode contient au moins 50 % en mole de Ni par rapport à la quantité totale de métaux de transition présents dans la matière active de cathode.

5. Cellule électrochimique selon l'une quelconque des revendications 1 à 4, dans laquelle la matière active de cathode contient au moins un métal de transition supplémentaire différent de Ni.

6. Cellule électrochimique selon l'une quelconque des revendications 1 à 5, dans laquelle la matière active de cathode contient du Mn, du Ni et du Co.

7. Cellule électrochimique selon l'une quelconque des revendications 1 à 6, dans laquelle la matière active de cathode est choisie parmi les oxydes de métaux de transition à structure lamellaire répondant à la formule générale (IIa)
Li_{(1+d1)}[Niₐ₁Co_{b1}Mn_{c1}]_{(1-d1)}O₂₊ₑ
dans laquelle
d1 vaut 0 à 0,3 ;
a1, b1 et c1 peuvent être identiques ou différents et valent indépendamment 0 à 0, 9, avec a1 + b1 + c1 = 1 ; et
-0,1 ≤ 9 e ≤ 0,1.

8. Cellule électrochimique selon l'une quelconque des revendications 1 à 6, dans laquelle la matière active de cathode est choisie parmi les oxydes de métaux de transition à structure lamellaire répondant à la formule générale (IIb)
Li_{1+d2}(Niₐ₂Co_{b2}Mn_{c2}M_{f})_{1-d2}O₂
dans laquelle
d2 est dans la plage de zéro à 0,2 ;
a2 est dans la plage de 0,2 à 0,9 ;
b2 est dans la plage de zéro à 0,35 ;
c2 est dans la plage de 0,1 à 0,7 ;
f est dans la plage de ≥ zéro à 0,2 ;
avec a2 + b2 + c2 + f = 1 ; et
M étant un ou plusieurs éléments choisis entre Al, Mg, Ca, V, Mo, Ti, Fe et Zn.

9. Cellule électrochimique selon l'une quelconque des revendications 1 à 5, dans laquelle la matière active de cathode est choisie parmi les oxydes mixtes de Ni, Co et Al dans lesquels du lithium est intercalé.

10. Cellule électrochimique selon l'une quelconque des revendications 1 à 6, dans laquelle la matière active de cathode est choisie parmi les spinelles contenant du manganèse répondant à la formule générale Li₁₊ₜM₂₋ₜO₄₋ₛ dans laquelle s vaut 0 à 0,4, t vaut 0 à 0,4 et M est Mn et Ni et éventuellement Co.

11. Cellule électrochimique selon l'une quelconque des revendications 1 à 10, dans laquelle le solvant organique aprotique (i) est choisi parmi les carbonates organiques cycliques et acycliques, les éthers de di(alkyle en C₁-C₁₀), les (alkylène en C₂-C₆) éthers de di(alkyle en C₁-C₄) et les polyéthers, les éthers cycliques, les acétals et cétals cycliques et acycliques, les orthoesters d'acides carboxyliques, les esters et diesters cycliques et acycliques d'acides carboxyliques, les sulfones cycliques et acycliques et les nitriles et dinitriles cycliques et acycliques et les mélanges de ceux-ci.

12. Cellule électrochimique selon l'une quelconque des revendications 1 à 11, dans laquelle le solvant organique aprotique (i) est choisi parmi les carbonates organiques cycliques et acycliques et les mélanges de ceux-ci.

13. Cellule électrochimique selon l'une quelconque des revendications 1 à 12, dans laquelle la composition d'électrolyte contient au moins un additif (iv) choisi parmi les additifs filmogènes, les agents ignifugeants, les additifs de surcharge, les agents mouillants, un capteur de HF et/ou H₂O, un stabilisant pour le sel LiPF₆, un agent augmentant la solubilisation ionique, les inhibiteurs de corrosion et les agents gélifiants.

14. Utilisation de CF₂H(CF₂)₃CH₂OCF₂CF₂H dans des compositions d'électrolyte pour des cellules électrochimiques comprenant une matière active de cathode contenant au moins un métal de transition pour la diminution de la dissolution de l'au moins un métal de transition dans la composition d'électrolyte.

15. Utilisation de CF₂H(CF₂)₃CH₂OCF₂CF₂H dans des compositions d'électrolyte pour des cellules électrochimiques pour l'abaissement de l'accroissement d'impédance dans les cellules électrochimiques.
